# EUROPEAN PATENT SPECIFICATION

(11) **EP 3 918 257 B1**
(45) Date of publication and mention of the grant of the patent: **21.02.2024**
(21) Application number: 20703203.8
(22) Date of filing: 31.01.2020
(51) Int. Cl.: F24S 10/30, F24S 10/50, H02S 40/42, H02S 40/44

(54) **HYBRID POWER AND HEAT GENERATING DEVICE**
HYBRIDSTROM- UND WÄRMEERZEUGUNGS VORRICHTUNG
APPAREIL HYBRIDE DE PRODUCTION ÉLECTRIQUE ET DE CHALEUR

(30) Priority: 31.01.2019 SE 1950112
(43) Date of publication of application: 08.12.2021
(73) Proprietor: SAMSTER AB, 421 37 Kungsbacka (SE)
(72) Inventor: SAMUELSSON, Kent, 437 35 Lindome (SE); STEIER, Vilhelm, 439 53 Åsa (SE)
(74) Representative: Kransell & Wennborg KB
(86) International application number: PCT/EP2020/052456
(87) International publication number: WO 2020/157290

(56) References cited:
- WO-A2-2012/130429
- US-A1- 2016 079 460

## Description

### Field of the Invention

The present invention relates to a hybrid power and heat generating device and to a method of operating a hybrid power and heat generating device.

### Background of the Invention

Solar power is one emerging technology for generating environmentally friendly power. Solar power may be collected using photovoltaic devices which directly generate electricity from solar radiation. Another possibility for collecting solar power is to use solar thermal collectors which operate by allowing a fluid to be heated by the solar radiation. The heat from the fluid is subsequently extracted.

There have been prior attempts to combine both photovoltaic devices and solar thermal collectors to form a hybrid solution. WO 2012/130429 A2 discloses a conversion device comprising a photovoltaic module and a solar thermal module with a surface element. A channel comprising a gas is arranged between the photovoltaic module and the surface element. By this means thermal energy can be transferred from or through the gas to the surface element.

However, the efficiency of photovoltaic devices depends strongly on the weather conditions as is the case for solar thermal power.

Accordingly, there is room for improvements with regards to the efficiency of combined power generating solutions.

### Summary

In view of the above-mentioned and other drawbacks of the prior art, it is an object of the present invention to provide a more efficient hybrid power and heat generating device.

According to a first aspect of the present invention, it is therefore provided a hybrid power and heat generating device comprising; a photovoltaic solar power collector configured to collect solar power from solar radiation received on an active side of the photovoltaic solar power collector; and a heat exchanging unit configured to cool the photovoltaic solar power collector, which heat exchanging unit includes a cooling plate arranged to transfer heat from the photovoltaic solar power collector to a cooling medium. The heat exchanging unit is adapted to transport the cooling medium away from the cooling plate for heat extraction from the cooling medium. The cooling plate is arranged with a gap from a rear side of the photovoltaic solar power collector, and the cooling medium is arranged to cool the cooling plate to a temperature which allows water vapor of the ambient air in the gap to condensate into water on the cooling plate in the gap. The hybrid power and heat generating device is operable in at least two operation modes; a normal operation mode in which the gap is at least partly filled with condensed water which condensed water transfers heat from the photovoltaic solar power collector to the cooling plate; and a security operation mode in which the gap is filled with air to thereby reduce the heat transfer from the photovoltaic solar collector to the cooling plate. The gap has a thickness of approx. 1 mm.

The present invention is based on the realization that it, under normal operation conditions, is desirable to maximize heat transfer from the photovoltaic solar power collector to a heat exchanging unit, but that, at some abnormal conditions, it is desirable to reduce such heat transfer.

The photovoltaic solar power collector normally requires cooling for generating electricity at optimal efficiency. However, if the temperature of the cooling media raises above a certain value it is desirable to reduce heat transfer from the photovoltaic collector to the heat exchanging unit in order a avoid overheating of the cooling medium. Such unwanted increase of the cooling media may occur e.g. if there is a power failure or other failure which prevents or interrupts the circulation of cooling media through the heat exchanging unit. If the cooling media circulation is stopped and additional heat is transferred from the photovoltaic collector to the cooling medium, there is a risk that the cooling media may reach its boiling temperature which may seriously damage the cooling circuit, especially the piping conducting the cooling medium.

It has been realized that arranging a comparatively narrow gap between the photovoltaic solar power collector and the heat exchanging unit allows for optimal heat transfer under normal conditions while reducing such heat transfer when there is a risk of over-heating.

In normal conditions the circulating cooling media may keep the temperature of the cooling plate and the temperature of air initially located in the gap well below the dew point of the air. By this means moisture in the air will condensate into water onto the cooling plate. As long as the thickness of the gap, i.e. the distance between the photovoltaic collector and the cooling plate, is sufficiently small, the so formed water will fully fill the gap such that the photovoltaic collector comes in thermal contact with the cooling plate through the water. Further, it has proven that a correctly designed gap provides for that the water will remain in the gap due to capillary forces therein. In the event that any water would leak out from the gap or evaporate, it will immediately be replaced by newly condensated water from air entering into the gap.

The heat transfer efficiency of water is approx. 23 times higher than of air and the thermal contact provided by the water in the gap thus provide for a very efficient heat transfer and cooling of the photovoltaic collector, which in turn increases the electricity power generation efficiency.

If the temperature of the cooling media, for any reason, would raise undesirably above a certain value, the hybrid power and heat generating device will automatically enter a security operation mode. At such instances heat from the cooling media will be transferred, via the cooling plate, to the condensate water in the gap. This in turn will cause the water to evaporate whereby the gap is instead filled with air. The thermal contact provided by the water between the photovoltaic collector and the cooling plate is thereby lost such that additional heat transfer from the photovoltaic collector to the cooling plate is heavily reduced or completely stopped. Thereby, additional heating of the cooling medium is stopped such that reaching the boiling temperature of the cooling media is avoided.

Since the cooling plate, during normal operation is cooled by a cooling medium, the cooling medium is heated via the cooling plate. The heated cooling medium is transported away from the cooling plate for extracting heat from the cooling medium elsewhere.

Accordingly, the proposed hybrid power and heat generating device is able to provide electrical power from the photovoltaic solar power collector, and heat from the heat exchanging unit.

A photovoltaic solar power collector may generally be a "solar cell". A photovoltaic solar power collector is configured to convert solar radiation impeding an active surface to electrical power.

According to examples, not part of the present invention, the thickness of the gap, i.e. the distance between the photovoltaic solar power collector and the cooling plate is between 0.5 and 2.0 mm. In the invention, the distance between the photovoltaic solar power collector and the cooling plate is approx. 1 mm. By this means condensate water formed on the cooling plate may fill the gap substantially or fully to thereby enhance heat transfer through the gap.

The heat exchanging unit may comprise piping arranged in thermal contact with the cooling plate, wherein the piping is configured to transport the cooling medium to the cooling plate for exchanging heat with the cooling plate. The piping provides a robust yet simple means for transporting the cooling medium.

The piping may be connectable to a heat generating unit configured to generate heat from the cooling medium downstream of the cooling plate. The proposed hybrid power and heat generating device allows for that the cooling medium is maintained at moderate temperatures. This allows for that the piping of the heat exchanging unit is connected to such a heat generating unit by means of low temperature feedlines, such as e.g. polymer feedlines sustaining temperatures up to approx. 50-60°.

The operation temperature of the cooling plate may be maintained below ambient temperature.

In embodiments, at least in the normal operating mode, the operation temperature of the cooling plate is maintained below the condensation temperature of the condensed liquid by the cooling medium. In other words, the cooling of the cooling medium is such that the air in the gap condenses into water to thereby fill the gap.

By maintaining the temperature of the cooling plate at a sufficiently low temperature, below the ambient temperature, the gap will be filled with water that have condensed on the surface of the cooling plate.

At the perimeter of the cooling plate there are advantageously openings such that the condensate liquid may pour out, e.g. drainage for the liquid. As liquid drains out from the gap, more condensate liquid is formed to maintain the gap filled with liquid.

Further, openings between the cooling plate and the photovoltaic solar power collector at the edges of the cooling plate allows for ambient air to enter the gap.

The photovoltaic solar power collector may include an electrically insulating back sheet arranged on a rear side opposite the active side, wherein the gap is formed between the cooling plate and the back sheet.

The gap may be formed in different advantageous ways of which some are described herein. However, other possible ways of forming the gap are conceivable.

According to embodiments, the cooling plate may include protrusions which define the gap, wherein the cooling plate is in contact with the photovoltaic solar power collector at the protrusions.

The protrusions may be stamped portions in the cooling plate, or distance elements attached to the cooling plate.

According to embodiments, the cooling plate may be attached to the photovoltaic solar power collector by flexible adhesive joints, wherein the air gap is defined by the height of the flexible adhesive joints. Such flexible joints further provide for good adhesion which also allows for thermal expansion differences between the cooling plate and the photovoltaic solar power collector. This in turn reduces the stress on the materials comprised in the cooling plate and the photovoltaic solar collector, whereby the expected lifespan of the hybrid power and heat generating device is increased substantially.

According to embodiments, the cooling plate may be shaped to include valleys and ridges, wherein the gap is defined by the valleys. At least a portion of the ridges may be arranged in contact with the photovoltaic solar power collector.

According to embodiments, the cooling plate may be at least partly corrugated, wherein the air gap is defined by depth of the corrugations. In this case, more than one gap may be formed. The gaps may be arranged in parallel.

The condensate liquid preferably fills the gap in the normal operation mode.

In some embodiments, at least one side of the cooling plate comprises a rugged surface. The rugged surface increases the contact surface with the ambient air and therefore also improves the heat transfer efficiency to the cooling plate.

According to embodiments, the cooling plate may be attachable to the photovoltaic solar power collector by an expandable elongated profile adapted to be arranged in a space between a frame portion arranged around the perimeter of the hybrid power and heat generating device and the backside of the cooling plate opposite the gap side, the expandable elongated profile is adapted to apply a pressure on the cooling plate by the expansion of the elongated profile in the space between the frame portion and the backside of the cooling plate. The elongated profile provides a reliable way to apply adjustable pressure for attaching the cooling plate to the photovoltaic solar power collector.

According to a second aspect of the present invention, there is provided a power generating system comprising: hybrid power and heat generating device according to any one of the embodiments of the first aspect; a heat generating unit connected to the heat exchanging unit, and configured to generate heat from the cooling medium; and an electricity distribution terminal connected to the photovoltaic solar power collector and configured to receive electric power from the photovoltaic solar power collector.

Further embodiments of, and effects obtained through this second aspect of the present invention are largely analogous to those described above for the first aspect of the invention.

There is also disclosed a method for assembling a hybrid power and heat generating device, the method comprises: providing a photovoltaic solar power collector configured to collect solar power from solar radiation impeding on an active side of the photovoltaic solar power collector; arranging a cooling plate of a heat exchanging unit such that a gap is formed from a rear side of the photovoltaic solar power collector to the cooling plate, wherein the gap is configured to allow condensate water to be formed in the gap such that the hybrid power and heat generating device is operable in two operation modes: a normal operation mode in which the gap is at least partly filled with condensate water, which condensate water transfers heat from the photovoltaic solar power collector to the cooling; and a security operation mode in which the gap is filled with air to thereby reduce the heat transfer from the photovoltaic solar collector to the cooling plate.

According to examples, the cooling plate may be attached to the rear side of the photovoltaic solar power collector using flexible adhesive joints.

According to examples, the photovoltaic solar power collector may include an electrically insulating back sheet arranged on a rear side opposite the active side, wherein the cooling plate is attached to the back sheet.

Further examples of, and effects obtained through this disclosed method for assembling are largely analogous to those described above for the first aspect and the second aspect of the invention.

Further features of, and advantages with, the present invention will become apparent when studying the appended claims and the following description. The skilled addressee realizes that different features of the present invention may be combined to create embodiments other than those described in the following, without departing from the scope of the present claims.

### Brief Description of the Drawings

These and other aspects of the present invention will now be described in more detail, with reference to the appended drawings showing an example embodiment of the invention, wherein:
Fig. 1 schematically illustrates an exploded view of a conceptual hybrid power and heat generating device;
Fig. 2 is a partial cross-section of the hybrid power and heat generating device shown in fig. 1;
Fig. 3 is perspective cross-section of the hybrid power and heat generating device shown in fig. 1;
Fig. 4A conceptually illustrates a first operating mode;
Fig. 4B conceptually illustrates a second operating mode;
Fig. 5A-D conceptually illustrates cooling plates and different ways of obtaining a gap;
Fig. 6 illustrates an example cooling plate;
Fig. 7 conceptually illustrates a fastening means for assembling a hybrid power and heat generating device;
Fig. 8 illustrates a hybrid power and heat generating system; and
Fig. 9 is a flow chart of method steps according to embodiments of the invention.

### Detailed Description of Example Embodiments

In the present detailed description, various embodiments of a power generation device and system according to the present disclosure are described. However, this invention may be embodied in many different forms and should not be construed as limited to the embodiments set forth herein; rather, these embodiments are provided for thoroughness and completeness, and fully convey the scope of the invention to the skilled person. Like reference characters refer to like elements throughout.

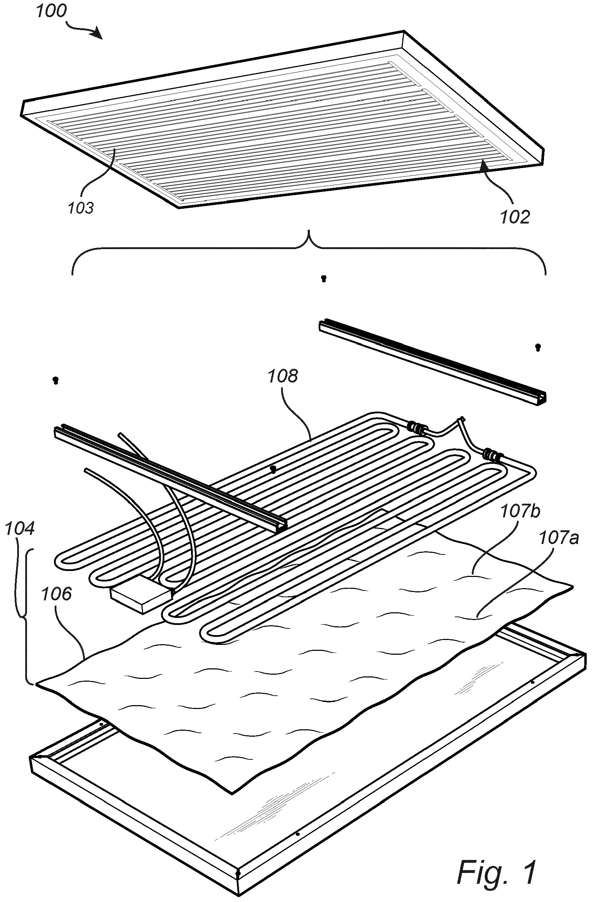

Fig. 1 schematically illustrates an exploded view of a conceptual hybrid power and heat generating device 100 of the present disclosure. The device 100 comprises a photovoltaic solar power collector 102 configured to collect solar power from solar radiation received on an active side 103 of the photovoltaic solar power collector 102.

The hybrid power and heat generating device 100 further comprises a heat exchanging unit 104 configured to cool the photovoltaic solar power collector 102. For cooling of the photovoltaic solar power collector 102 the heat exchanging unit 104 includes a cooling plate 106. The cooling plate 106 is arranged so that a gap or generally spacing is present between the cooling plate 106 and the photovoltaic solar power collector 102. In the exemplifying embodiment the gap is approx. 1 mm thick. However, the thickness of the gap may be varied but should preferably be between 0.5 to 2.0 mm. The gap may be obtained in various ways with the photovoltaic solar power collector 102 and the cooling plate 106 with or without contact with each other. In fig. 1, the cooling plate 106 is irregularly shaped to thereby form local valleys 107a and ridges 107b or protrusions so that when the photovoltaic solar power collector 102 and the cooling plate 106 are arranged in contact a gap is formed between them.

The cooling plate 106 is arranged to receive heat from the photovoltaic collector 102 to heat a cooling medium which is in thermal contact with the cooling plate 106. The heat is transferred to the cooling medium which may for example be transported to the heat exchanging unit 104 by pipes 108 which are arranged in contact with the cooling plate 106 to allow for heat transfer from the cooling plate to the cooling medium although other means for enabling the heat transfer are conceivable. The pipes 108 are arranged on the opposite side of the cooling plate 106 compared to the location of the gap. Thus, the cooling plate 106 is interleaved between the pipes 108 and the photovoltaic solar power collector 102. An alternative to pipes may be ducts formed by a corrugated plate arranged in contact with the rear side of the cooling plate 106, opposite the gap.

The cooling medium may thus be heated by exchanging heat with the cooling plate which is heated by the photovoltaic collector 102. The heat exchanging unit 104 is adapted to transport the cooling medium away from the cooling plate 106 for heat extraction from the cooling medium.

The gap is configured to allow condensed water to be formed and maintained in the gap. Thus, the cooling medium may cool the cooling plate 106 to a suitable temperature that allows for condensed water to be formed from the ambient air. For example, water may be formed from water vapor naturally occurring in the ambient air. The water condensates on the surface of the cooling plate 106 in the gap.

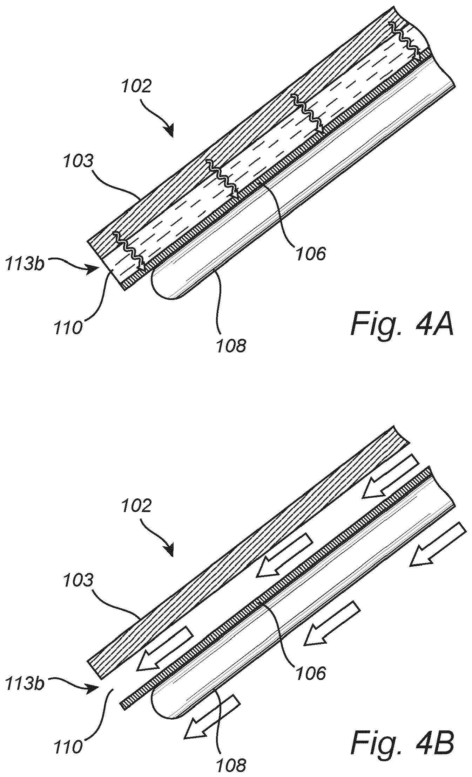

The hybrid power and heat generating device is operable in at least two operation modes. A normal operation mode in which the gap is at least partly filled with condensate air to provide a thermal contact by means of the water between the cooling plate 106 and the photovoltaic solar power collector 102 at the gap. I In a security operation mode water is evaporated and the gap is filled with air. This is illustrated in more detail in fig. 4A-B.

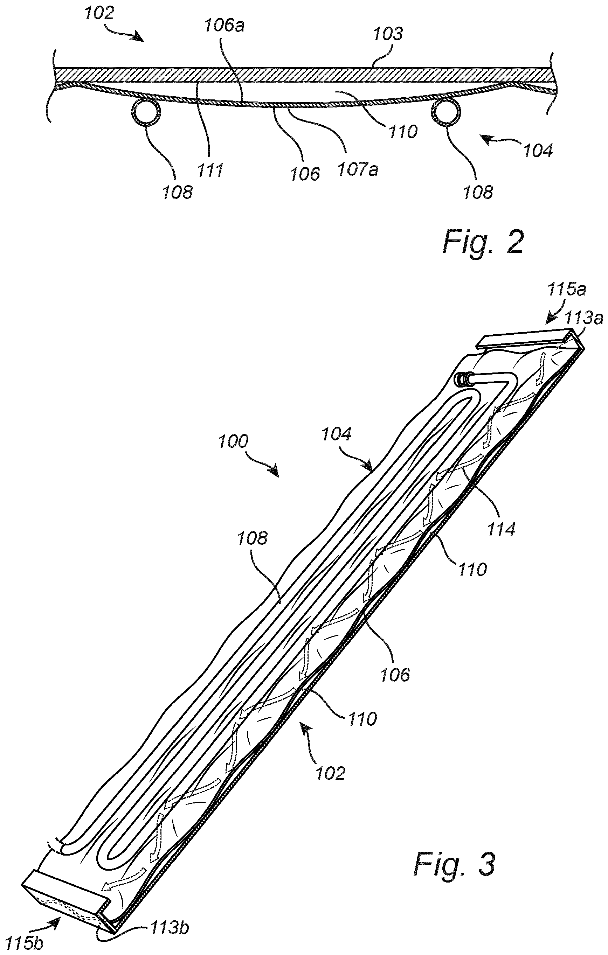

Turning now to fig. 2 which is a partial cross-section of the hybrid power and heat generating device 100 shown in fig. 1. Fig. 2 conceptually illustrates a valley 107a in the cooling plate 106 which allows for a gap 110 to be formed between the cooling plate 106 and the photovoltaic solar power collector having an active side 103. Thus, the gap 110 is defined by the shape of the cooling plate 106 and the photovoltaic solar power collector 102. The pipe 108 for transporting the cooling medium and the gap are on opposite sides of the cooling plate 106.

In some possible implementations it is conceivable to add further cooling plates in contact with the pipe 108. Such additional cooling plates may be arranged such that the pipe 108 is interleaved between two cooling plates. This would increase the total surface area which exchanges heat with ambient air and hence also the amount of heat extractable.

In fig. 2 the cooling plate 106 is in contact with the photovoltaic solar power collector rear side 111 opposite the active side 103 at ridges 107b. The rear side 111 of the photovoltaic solar power collector 102 may be covered by an electrically insulating back sheet. The electrically insulating back sheet advantageously prevents short circuits in the photovoltaic solar power collector 102 which may otherwise be caused by contact with water in the gap 110. The rear side 111 of the photovoltaic solar power collector 102 faces into the gap 110 and one surface 106a of the cooling plate 106 faces into the gap 110. In other words, the gap 110 is delimited by the rear side 111 of the photovoltaic solar power collector 102 and the surface 106a of the cooling plate 106.

Fig. 3 is a perspective cross-section of the hybrid power and heat generating device 100 shown in fig. 1. The cross-section is along a longitudinal axis of the hybrid power and heat generating device 100. Fig. 3 conceptually illustrates that 113a-b between the cooling plate and the photovoltaic solar power collector at the edges 115a-b of the cooling plate allows for outdoor air to enter the gap 110. Furthermore, the openings 113a-allows for condensate water, indicated by arrows 114 to pour out of the gap, whereby more condensed fills the gap in a continuous process, in the normal operation mode. The hybrid power and heat generating device 100 is preferably arranged with an inclined angle so that the liquid in the gap pours in the downslope. The gap 110 is in fig. 3 shown as continuous duct in a zigzag configuration defined by the shape of the cooling plate 106. However, this particular configuration is one of several possible configurations.

In embodiments of the present disclosure the photovoltaic solar power collector is configured to generate electrical power by converting the impeding solar radiation to electricity by means known *per* se.

Furthermore, the piping is connectable to a heat generating unit, e.g. a heat pump, configured to generate heat from the cooling medium downstream of the cooling plate. The heat pump may e.g. be a geothermal heat pump, an exhaust air heat pump or a heat pump in a district heating system. The extraction of heat from a cooling medium by means of a heat pump is *per se* known and will not be described in detail herein.

Fig. 4A conceptually illustrates the normal operating mode and fig. 4B conceptually illustrates the security operating mode of a hybrid power and heat generating device according to the present disclosure.

In the normal operating mode moisture from ambient air initially located in the gap 110 has condensed on the cooling plate 106 so that the gap 110 is at least partly filled with condensed water. The condensed water provides thermal contact between the photovoltaic solar power collector 102 and the cooling plate 106. In the normal operating mode, the temperature of the cooling plate 106 is kept below the dew point of the ambient air in order to assure the formation of water in the gap 110. In this operating mode the photovoltaic solar power collector 102 is in an efficient operating state.

Accordingly, when the temperature of the cooling plate 106 is low, e.g. below the condensation temperature of water vapor in the ambient air, water vapor condenses on the cooling plate 106 and water is formed in the gap 110. This leads to that the gap 110 is maintained filled with the liquid to maintain the thermal contact with the cooling plate 106. This ensures efficient cooling of the photovoltaic solar power collector 102.

In the normal operating mode conceptually illustrated in fig. 4A, the hybrid power and heat generating device 100 primarily operates in a solar power mode. In other words, the hybrid power and heat generating device 100 is in this mode configured to prioritize the operation of the photovoltaic solar power collector 102 and therefore to provide sufficient cooling which is enabled by the thermal contact with the cooling plate via the condensed water in the gap 110. The cooling of the photovoltaic solar power collector 102 may be considered to be maximized in the normal operating mode.

In the security operation mode illustrated in fig. 4B, the temperature of the cooling medium has increased unexpectedly. This may be caused e.g. if there has been a power failure in the power net supplying power to the cooling media circulation pump or a heat pump to which the cooling medium circuit may be connected. Such failure of the circulation pump or the heat pump will prevent any extraction of heat from the cooling medium, such as to a heat pump or other heat extraction device connected to the piping of the heat exchanger. Due to continued delivery of heat from the photovoltaic solar collector and/or the ambient air, this will lead to that the temperature of the cooling medium in the piping of the heat exchanger will increase. When the temperature of the cooling medium raises, the heat exchanger will not be able to maintain the temperature in the gap below the dew point of the ambient air. The condensate water in the gap 106 then absorbs heat from the photovoltaic solar collector 102, the ambient air and the cooling plate106, the temperature of which is raising. This will cause the water in the gap 110 to evaporate and to be replaced by ambient air entering into the gap 110. Alternatively or in combination, water may leave the gap by drainage. In both cases and as long as the temperature of the cooling plate is above the dew point of the air in the gap 110, no further water will condensate in the gap such that the gap will instead be filled by ambient air.

Now, since air has a much lower heat conductivity than water no substantial heat will be transferred from the photovoltaic collector to the cooling plate or to the cooling medium. Thereby, further increase of the cooling medium temperature is efficiently prevented and the risk of the cooling medium to reach its boiling temperature is eliminated. To this end it may be noted that the condensate water in the gap is maintained at atmospheric pressure whereas the cooling media is pressurized to at least 1.5 times the atmospheric pressure. Hence, it is ascertained that the all condensate water has evaporated well before the cooling medium reaches its boiling temperature. Additionally, once the water in the gap has been replaced by ambient air, heat will be transferred from the cooling medium via the cooling plate to the air in the gap and also, through the piping 108 to the rear side of the heat exchanger to the ambient air. This further reduces the risk of the cooling medium to reach its boiling temperature.

In the normal operation mode, the operation temperature of the cooling plate 106 is preferably maintained below ambient temperature. This provides for an efficient extraction of heat from the ambient air and for water vapor to condense on the surface of the cooling plate 106 in the gap 110 once the ambient temperature and the air humidity is sufficiently high. Extraction of heat from ambient air and the electricity generation from the photovoltaic solar power collector 102 is concurrently operating. Furthermore, the hybrid power and heat generating device 100 is not thermally isolated. Instead, the hybrid power and heat generating device 100 is advantageously adapted for cold operation, e.g. below ambient temperature. For example, the operation temperature of the cooling plate may be as low as -20°C.

One possible way of obtaining the gap 110 is conceptually illustrated in figs. 1-3, by means of valleys 107a and ridges 107b or protrusions in the cooling plate.

It should be noted that the width of the gap, i.e. the distance from the cooling plate and the back side of the photovoltaic solar power collector 102 is exaggerated in fig. 4A-B in order to provide clarity in the drawing.

Although it is described that the width of the gap 110 allows for condensed liquid to pour out from the gap 110, the width of the gap may be such that capillary forces maintain some of the liquid in the gap 110. This liquid may evaporate.

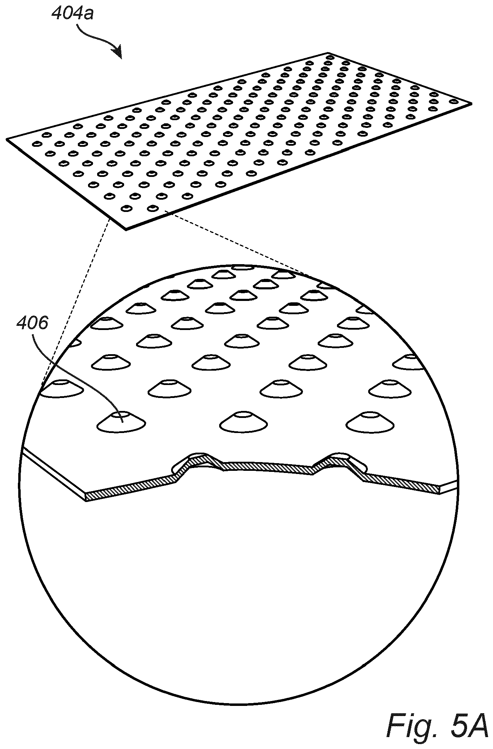

Figs. 5A-D illustrates further ways of obtaining the gap. For example, as shown in fig. 5A, the cooling plate 404a may include protrusions 406 which define the gap: In this case, the cooling plate 404a may be in contact with the photovoltaic solar power collector at the protrusions. The protrusions 406 may be stamped portions in the cooling plate 404a.

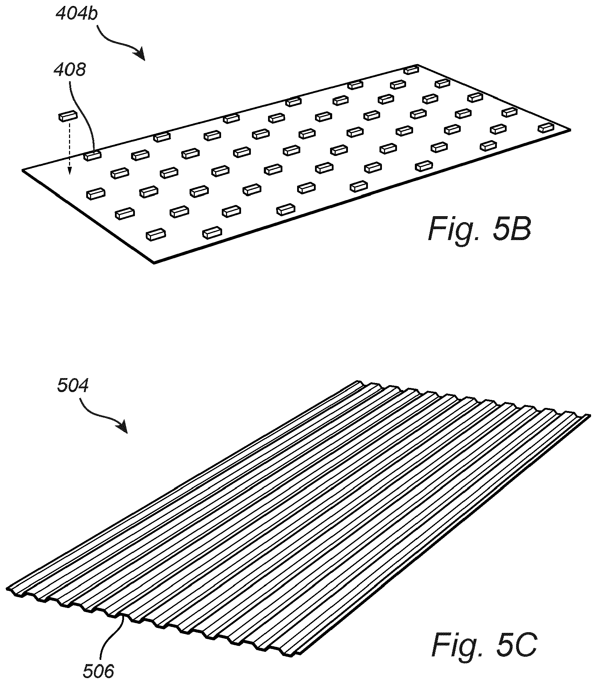

Fig. 5B illustrates another possibility where the protrusions are distance elements 408 attached to the cooling plate 404b. The attachment may be performed by e.g. gluing or welding.

Fig. 5C illustrates another possible cooling plate 504 provided as a corrugated plate. The air gap is here defined by the depth of the corrugations 506.

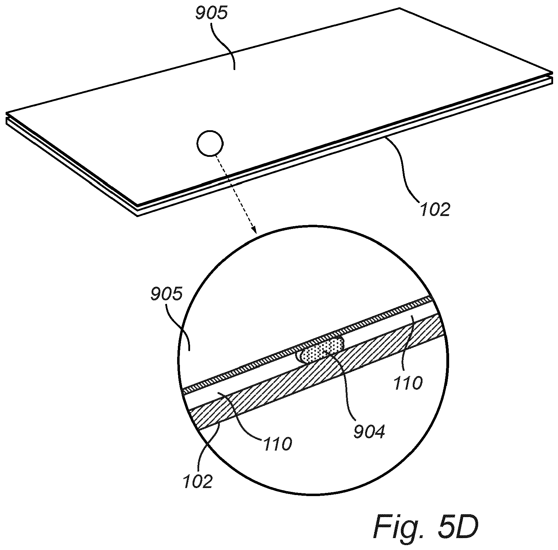

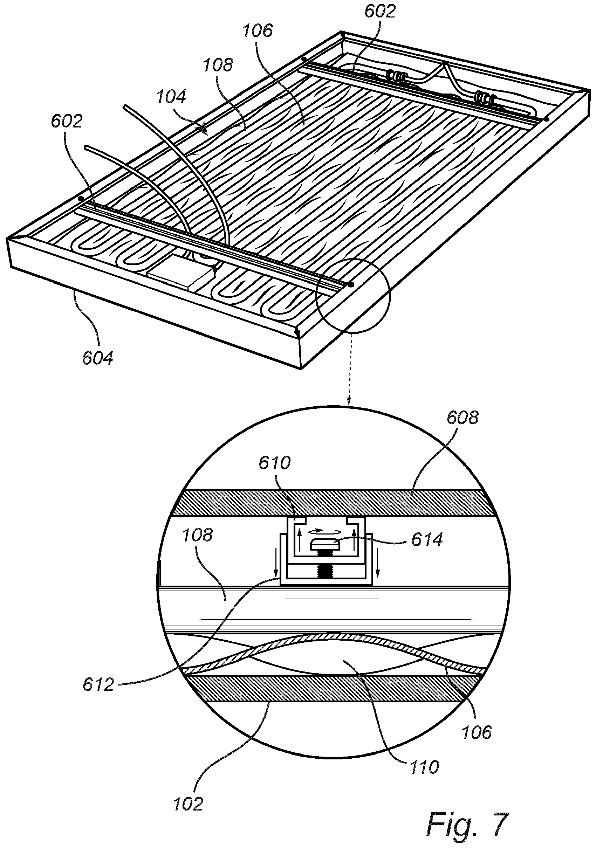

Fig. 5D illustrates a further possibility in which flexible adhesive joints 904 are provided for attaching the cooling plate 905 to the photovoltaic solar power collector 102. The air gap is defined by the height of the flexible adhesive joints. The flexible adhesive joints may be comprised of e.g. a glue, or silicone, or a sealant. Advantageously, flexible adhesive joints allow for different thermal expansion properties of the cooling plate and the photovoltaic solar power collector 102. By this means, the risk of the hybrid power and heat generating device being damaged by different thermal expansion and/or contraction of the photovoltaic collector and the heat exchanging unit is greatly reduced. In cases where the photovoltaic collector comprises an electrically insulating back sheet such flexible joints prevents scrapping of the back sheet if the cooling plate moves relative to the photovoltaic collector due to different thermal expansion. The flexible adhesive joints 904 thus provides an advantageous way of attaching the cooling plate 905 to the photovoltaic solar power collector 102 and may replace the expandable elongated profiles described with reference to fig. 7. Attaching the cooling plate 905 to the photovoltaic solar power collector 102 with the flexible adhesive joints 904 provides a combined attachment means and means for creating the gap 110. Furthermore, the attachment procedure for attaching the cooling plate 905 to the photovoltaic solar power collector 102 as well as any disassembling thereof is simplified with the flexible adhesive joints 904.

Regardless of how the gap is obtained, it is dimensioned such that the gap may be filled with water in the normal operation mode by the condensation of water vapor from the ambient air on the cooling plate. This is important because the thermal contact between the cooling plate and the photovoltaic solar power collector provides the required cooling for the photovoltaic solar power collector. It has proven that a suitable thickness of the gap is between 0.5 and 2.0 mm and, in the invention, the gap is approx. 1.0 mm. In cases where the thickness of the gap varies, as illustrated e.g. in figs 1-3 and 7, it is preferred that the maximum thickness is 2.0 mm. As long as the gap exhibits these dimensions and the cooling plate is maintained below the dew point of the ambient air condensate water will automatically be formed and maintained in the gap.

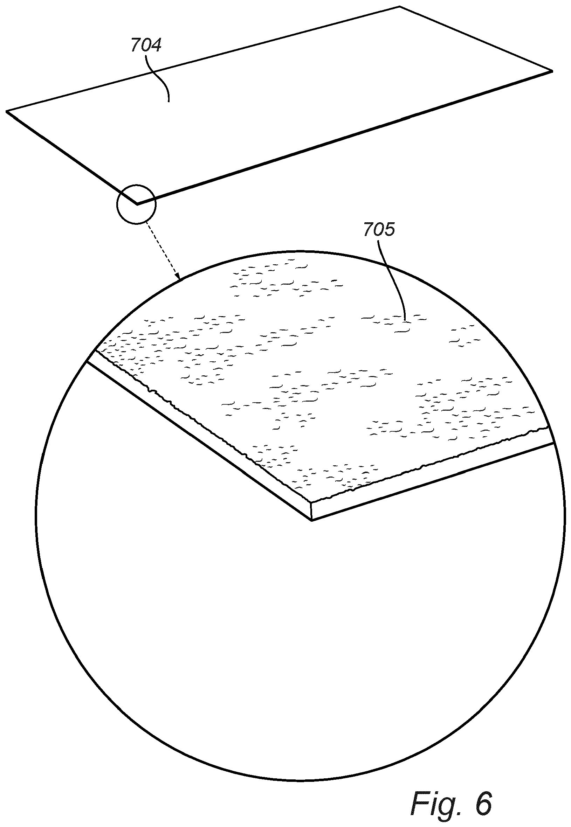

Fig. 6 illustrates a cooling plate 704 with a rugged surface 705, i.e. with a non-smooth surface which advantageously increases the surface area of the cooling plate thus also the contact surface with ambient air. This improves the heat exchanging efficiency of the cooling plate.

Fig. 7 illustrate an example way of attaching a cooling plate 106 to a photovoltaic solar power collector 102 using an expandable elongated profile 602, although other attachment means are conceivable. A frame 604 is arranged around the outer perimeter of the cooling plate 106 and the photovoltaic solar power collector 102. The frame 604 comprises frame portion 608 which enclose the outer perimeters of the cooling plate 106 and the photovoltaic solar power collector 102.

The expandable elongated profile 602 is adapted to be arranged in a space between the frame portion 608 arranged around the perimeter of the hybrid power and heat generating device and the backside of the cooling plate 106 opposite the gap side. The expandable elongated profile 602 is adapted to apply a pressure on the cooling plate 106 by the expansion of the elongated profile 602 in the space between the frame portion 608 and the backside of the cooling plate 106.

The expandable elongated profile 602 comprises an inner part 610 and an outer part 612. The inner part is slidable into the outer part 612. A set of screws 614 (only one is shown) are adapted to be tightened in threaded through-holes of the inner part 610 to thereby push on the outer part 612. In this way, the expandable elongated profile 602 is expanded in the vertical direction in the close-up view so that the outer part 612 applies a force on the cooling plate 106 either directly or indirectly via e.g. pipes for the cooling medium, and the inner part 610 applies a force on the frame portion 608.

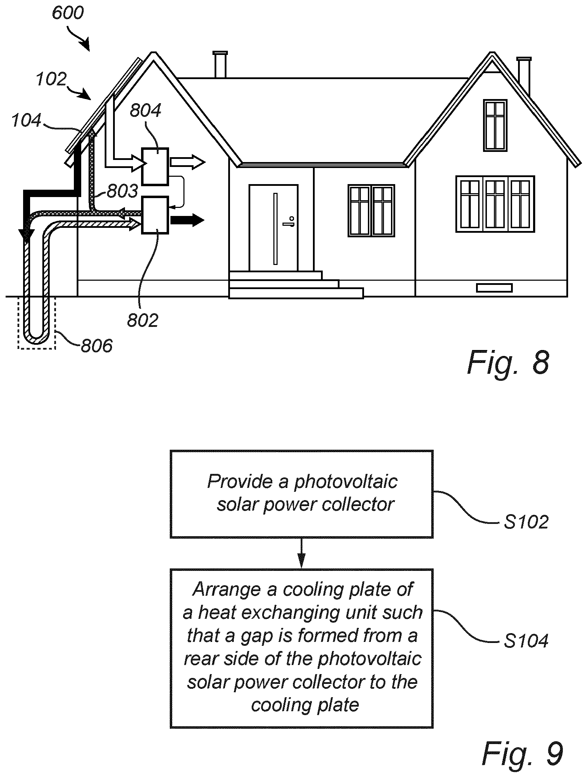

Fig. 8 illustrates a hybrid power and heat generating system 600 comprising a hybrid power and heat generating device 100, e.g. as shown in fig. 1. A heat generating unit 802 is connected to the piping of the heat exchanging unit and is configured to generate heat from the cooling medium 803. The cooling medium 803 is transferred from the heat generating unit 802 to the heat exchanging unit 104 of the hybrid power and heat generating device 100 arranged on the roof of a facility, e.g. a house. Typically, the cooling medium may be propylene glycol which is pressurized to approx. 1,5 atm. The hybrid power and heat generating device 100 allows for that the cooling medium may be maintained at comparatively low temperature. By this means the piping of the heat exchanging unit may be connected to the heat generating unit by means of low temperature feedlines such that polymer tubes sustaining temperatures up to approx. 50-60°C.

Further, an electricity distribution terminal 804 is connected to the photovoltaic solar power collector 102 and is configured to receive electric power from the photovoltaic solar power collector and generate electrical power to be used in the facility. The electricity distribution terminal 804 comprises the necessary control units and power distribution means and is *per* se known in the art.

The power transferred by the electricity distribution terminal 804 may be used for powering the heat generating unit 802 which may be provided as a heat pump comprising necessary pumps, heat exchangers, and control units, etc. for operating the heat pump. The electric power generated by the hybrid power and heat generating device 100 may also be used to power a circulation pump for circulating the cooling medium in the piping of the heat exchanger and the feedline. By this means, power supply to the facility including the circulation of the cooling medium is made independent of any external power supply such that the reliability of the power supply is enhanced.

The cooling medium that has been heated by exchanging heat in the heat exchanging unit may be transferred to a borehole heat exchanger in a well 806. The borehole heat exchanger is part of a geothermal heat pump system, whereby in such case the heat generating unit 802 may be a geothermal heat pump. In this type of system, the piping of the heat exchanging unit may be connected to the borehole heat exchanger which is connected to the geothermal heat pump with suitable tubing or piping.

However, in other possible implementations, the heat exchanging unit is directly connected to the heat generating unit 802 to thereby receive cooling medium therefrom and subsequently transfer the heated cooling medium back to the heat generating unit 802. In either case, the feed lines connected to the piping of the heat exchanging unit 104 may be connected to the refrigerant circulation system of the heat pump by means of a shunt valve. By regulating the flow of cooling medium from the heat exchanger which should be mixed into the refrigerant circulation system of the heat pump overheating of the heat pump may be avoided. Typically, the heat pump has an optimal refrigerant operating temperature of 0-15°C, whereas the normal operating temperature of the cooling medium of the hybrid power and heat generating device may be higher. Thus, by utilizing a shunt valve it may be assured that the heat transferred by the cooling media from the heat exchanger to the heat pump does not cause the refrigerant of the heat pump to raise above its optimum operation temperature. In addition, in case the temperature of the cooling medium would reach temperatures that would be damaging to the heat pump system, the shunt valve will throttle the influx of cooling media into the refrigerant circulating system such that overheating of the heat pump system is avoided. The same shunt valve principle may also be applied at systems where the feedlines circulating the cooling medium of the heat exchanger of the hybrid power and heat generating device are connected to the refrigerant circulating system of the heat pump by means of a heat exchanger, which separates the cooling media from the refrigerant.

The system may preferably further comprise various sensors (not shown) for detecting ambient and operational conditions, which sensors provide corresponding data to a control unit for controlling the operation of the system. Such a control unit may be integrated in the electricity distribution terminal 804 or be positioned elsewhere. Examples of such sensors are air humidity sensors for detecting the humidity of the ambient air and temperature sensors for detecting the temperature of the ambient air and of the cooling medium at passage of the heat exchanging unit and/or in the vicinity of the heat generating unit. Additionally, the system may comprise sensors for detecting the flow rate of the cooling medium e.g. at passage of the heat exchanging unit and/or in the vicinity of the heat generating unit.

The values detected by the sensors may be provided to the control unit which controls the operation of the system. Such control of the system may comprise e.g. controlling the operational power of the heat extracting device in order thereby to regulate the temperature of the cooling medium provided from the heat generating unit 802 to the hybrid power and heat generating device 100.

Fig. 9 is a flow chart of method steps for assembling a hybrid power and heat generating device according to embodiments of the invention. In step S102, providing a photovoltaic solar power collector configured to collect solar power from solar radiation impeding on an active side of the photovoltaic solar power collector. Subsequently, arrange S104 a cooling plate of a heat exchanging unit such that a gap is formed from a rear side of the photovoltaic solar power collector to the cooling plate. The gap is configured to allow condensate water to be formed in the gap such that the hybrid power and heat generating device is operable in two operation modes: a normal operation mode in which the gap is at least partly filled with condensate water to provide a thermal contact between the cooling plate and the photovoltaic solar power collector at the gap; and a security operation mode in which the gap is filled with air.

When arranging the cooling plate, it may be included to attach the cooling plate to the rear side of the photovoltaic solar power collector using flexible adhesive joints. The cooling plate may be attached to an electrically insulating back sheet of the photovoltaic solar power collector arranged on a rear side opposite the active.

The thickness of the cooling plate may be in the order of millimeters or parts of millimeters. The thicker the cooling plate is the better the temperature properties for extracting heat gets, however, the installation weight and the cost of the cooling plate increases.

The relative dimensions of the cooling plates, the photovoltaic solar power collector, the gaps, the pipes, etc. in the drawings are selected for clarity and do not necessarily reflect the actual dimensions in a fully operable device.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A method of operating a hybrid power and heat generating device (100), which device comprises:
- a photovoltaic solar power collector (102) configured to collect solar power from solar radiation received on an active side (103) of the photovoltaic solar power collector; and
- a heat exchanging unit (104) configured to cool the photovoltaic solar power collector, which heat exchanging unit includes a cooling plate (106;404;504;704) arranged to transfer heat from the photovoltaic solar power collector (102) to a cooling medium,
wherein the heat exchanging unit (104) is adapted to transport the cooling medium away from the cooling plate (106;404;504;704) for heat extraction from the cooling medium,
wherein the cooling plate (106;404;504;704) is arranged with a gap (110) from a rear side (111) of the photovoltaic solar power collector (102), **characterized in that** the cooling medium is arranged to cool the cooling plate (106;404;504;704) to a temperature which allows water vapor of the ambient air in the gap (110) to condensate into water on the cooling plate (106;404;504;704) in the gap (110),
which method comprises
- operating the hybrid power and heat generating device (100) in a normal operation mode in which the gap (110) is at least partly filled with condensed water, which condensed water transfers heat from the photovoltaic solar power collector (102) to the cooling plate (106;404;504;704); and
- operating the hybrid power and heat generating device (100) in a security operation mode in which the gap (110) is filled with air to thereby reduce the heat transfer from the photovoltaic solar collector (102) to the cooling plate (106;404;504;704).

2. Method according to claim 1, wherein the temperature of the cooling plate (106;404;504;704) is maintained below the dew point of the ambient air in the normal operating mode.

3. Method according to claim 1 or 2, wherein the gap (110) is maintained filled with condensed water in the normal operation mode.

4. Method according to any of claims 1-3, wherein the temperature of the cooling plate (106;404;504;704) is maintained above the dew point of the ambient air in the security operating mode.

5. A hybrid power and heat generating device (100), which device comprising:
- a photovoltaic solar power collector (102) configured to collect solar power from solar radiation received on an active side (103) of the photovoltaic solar power collector; and
- a heat exchanging unit (104) configured to cool the photovoltaic solar power collector, which heat exchanging unit includes a cooling plate (106;404;504;704) arranged to transfer heat from the photovoltaic solar power collector (102) to a cooling medium,
wherein the heat exchanging unit (104) is adapted to transport the cooling medium away from the cooling plate (106;404;504;704) for heat extraction from the cooling medium,
wherein the cooling plate (106;404;504;704) is arranged with a gap (110) from a rear side (111) of the photovoltaic solar power collector (102),
**characterized in that** the hybrid power and heat generating device (100) further comprises means for maintaining the temperature of the cooling plate (106;404;504;704) below the dew point of the ambient air by the cooling medium to thereby allow operating the hybrid power and heat generating device (100) in a normal operation mode in which the gap (110) is at least partly filled with condensed water, which condensed water transfers heat from the photovoltaic solar power collector (102) to the cooling plate (106;404;504;704) and
wherein the hybrid power and heat generating device (100) is further operable in a security operation mode in which the gap (110) is filled with air to thereby reduce the heat transfer from the photovoltaic solar collector(102) to the cooling plate (106;404;504;704).

6. The hybrid power and heat generating device according to claim 5, wherein the heat exchanging unit (104) comprises a piping (108) arranged in thermal contact with the cooling plate (106;404;504;704), wherein the piping (108) is configured to transport the cooling medium to the cooling plate (106;404;504;704) for exchanging heat with the cooling plate.

7. The hybrid power and heat generating device according to any of claims 5-6, wherein the operation temperature of the cooling plate (106;404;504;704), in the normal operation mode is maintained below the ambient temperature.

8. The hybrid power and heat generating device according to any of claims 5-7, wherein the photovoltaic solar power collector (102) includes an electrically insulating back sheet arranged on a rear side (111) opposite the active side (103), wherein the gap (110) is formed between the cooling plate (106;404;504;704) and the back sheet.

9. The hybrid power and heat generating device according to any of claims 5-8, wherein the cooling plate (404a, 404b) includes protrusions (406, 408) which define the gap, wherein the cooling plate is in contact with the photovoltaic solar power collector at the protrusions.

10. The hybrid power and heat generating device according to any one of claims 5-9, wherein the cooling plate (905) is attached to the photovoltaic solar power collector by flexible adhesive joints (904), wherein the air gap (110) is defined by the height of the flexible adhesive joints (904).

11. The hybrid power and heat generating device according to any of claims 5-10, wherein the condensate water fills the gap (110) in the normal operation mode.

12. The hybrid power and heat generating device according to any of claims 5-11, wherein openings (113a-b) between the cooling plate (106) and the photovoltaic solar power collector at the edges (115a-b) of the cooling plate allow for ambient air to enter the gap.

13. A hybrid power and heat generating system (800) comprising:
- a hybrid power and heat generating device (100) according to any of claims 5-12;
- a heat generating unit (802) connected to the heat exchanging unit, and configured to generate heat from the cooling medium (803); and
- an electricity distribution terminal (804) connected to the photovoltaic solar power collector and configured to receive electric power from the photovoltaic solar power collector.

## Patentansprüche

1. Verfahren zum Betrieb einer Hybrid-Strom- und Wärmeerzeugungsvorrichtung (100), wobei die Vorrichtung Folgendes umfasst:
- einen Photovoltaik-Solarstromkollektor (102), der zum Sammeln von Solarenergie aus der Sonnenstrahlung, die auf einer aktiven Seite (103) des Photovoltaik-Solarstromkollektors empfangen wird, konfiguriert ist; und
- eine Wärmetauscheinheit (104), die zum Kühlen des Photovoltaik-Solarstromkollektors konfiguriert ist, wobei die Wärmetauscheinheit eine Kühlplatte (106; 404; 504; 704) beinhaltet, die zum Übertragen von Wärme vom Photovoltaik-Solarstromkollektor (102) auf ein Kühlmedium geeignet ist,
wobei die Wärmetauscheinheit (104) zum Transportieren des Kühlmediums weg von der Kühlplatte (106; 404; 504; 704) zur Wärmeauskopplung aus dem Kühlmedium geeignet ist,
wobei die Kühlplatte (106; 404; 504; 704) mit einem Spalt (110) von einer Rückseite (111) des Photovoltaik-Solarstromkollektors (102) angeordnet ist,
**dadurch gekennzeichnet, dass** das Kühlmedium zum Kühlen der Kühlplatte (106; 404; 504; 704) auf eine Temperatur geeignet ist, welche es gestattet, dass Wasserdampf der Umgebungsluft in dem Spalt (110) in dem Spalt (110) auf der Kühlplatte (106; 404; 504; 704) zu Wasser kondensiert,
wobei das Verfahren Folgendes umfasst:
- Betreiben der Hybrid-Strom- und Wärmeerzeugungsvorrichtung (100) in einem normalen Betriebsmodus, in welchem der Spalt (110) zumindest teilweise mit kondensiertem Wasser gefüllt ist, wobei das kondensierte Wasser Wärme vom Photovoltaik-Solarstromkollektor (102) auf die Kühlplatte (106; 404; 504; 704) überträgt; und
- Betreiben der Hybrid-Strom- und Wärmeerzeugungsvorrichtung (100) in einem Sicherheitsbetriebsmodus, in welchem der Spalt (110) mit Luft gefüllt ist, um dadurch die Wärmeübertragung vom Photovoltaik-Solarkollektor (102) auf die Kühlplatte (106; 404; 504; 704) zu verringern.

2. Verfahren nach Anspruch 1, wobei die Temperatur der Kühlplatte (106; 404; 504; 704) im normalen Betriebsmodus unterhalb des Taupunkts der Umgebungsluft gehalten wird.

3. Verfahren nach Anspruch 1 oder 2, wobei der Spalt (110) im normalen Betriebsmodus mit kondensiertem Wasser gefüllt gehalten wird.

4. Verfahren nach einem der Ansprüche 1-3, wobei die Temperatur der Kühlplatte (106; 404; 504; 704) im Sicherheitsbetriebsmodus oberhalb des Taupunkts der Umgebungsluft gehalten wird.

5. Hybrid-Strom- und Wärmeerzeugungsvorrichtung (100), wobei die Vorrichtung Folgendes umfasst:
- einen Photovoltaik-Solarstromkollektor (102), der zum Sammeln von Solarenergie aus der Sonnenstrahlung, die auf einer aktiven Seite (103) des Photovoltaik-Solarstromkollektors empfangen wird, konfiguriert ist; und
- eine Wärmetauscheinheit (104), die zum Kühlen des Photovoltaik-Solarstromkollektors konfiguriert ist, wobei die Wärmetauscheinheit eine Kühlplatte (106; 404; 504; 704) beinhaltet, die zum Übertragen von Wärme vom Photovoltaik-Solarstromkollektor (102) auf ein Kühlmedium geeignet ist,
wobei die Wärmetauscheinheit (104) zum Transportieren des Kühlmediums weg von der Kühlplatte (106; 404; 504; 704) zur Wärmeauskopplung aus dem Kühlmedium geeignet ist,
wobei die Kühlplatte (106; 404; 504; 704) mit einem Spalt (110) von einer Rückseite (111) des Photovoltaik-Solarstromkollektors (102) angeordnet ist,
**dadurch gekennzeichnet, dass** die Hybrid-Strom- und Wärmeerzeugungsvorrichtung (100) ferner Mittel zum Aufrechterhalten der Temperatur der Kühlplatte (106; 404; 504; 704) unterhalb des Taupunkts der Umgebungsluft durch das Kühlmedium umfasst, um dadurch ein Betreiben der Hybrid-Strom- und Wärmeerzeugungsvorrichtung (100) in einem normalen Betriebsmodus zu gestatten, in welchem der Spalt (110) zumindest teilweise mit kondensiertem Wasser gefüllt ist, wobei das kondensierte Wasser Wärme vom Photovoltaik-Solarstromkollektor (102) auf die Kühlplatte (106; 404; 504; 704) überträgt, und
wobei die Hybrid-Strom- und Wärmeerzeugungsvorrichtung (100) ferner in einem Sicherheitsbetriebsmodus betrieben werden kann, in welchem der Spalt (110) mit Luft gefüllt ist, um dadurch die Wärmeübertragung vom Photovoltaik-Solarkollektor(102) auf die Kühlplatte (106; 404; 504; 704) zu verringern.

6. Hybrid-Strom- und Wärmeerzeugungsvorrichtung nach Anspruch 5, wobei die Wärmetauscheinheit (104) eine Verrohrung (108) umfasst, die in thermischem Kontakt mit der Kühlplatte (106; 404; 504; 704) angeordnet ist, wobei die Verrohrung (108) zum Transportieren des Kühlmediums zur Kühlplatte (106; 404; 504; 704) zum Austauschen von Wärme mit der Kühlplatte konfiguriert ist.

7. Hybrid-Strom- und Wärmeerzeugungsvorrichtung nach einem der Ansprüche 5-6, wobei die Betriebstemperatur der Kühlplatte (106; 404; 504; 704) im normalen Betriebsmodus unterhalb der Umgebungstemperatur gehalten wird.

8. Hybrid-Strom- und Wärmeerzeugungsvorrichtung nach einem der Ansprüche 5-7, wobei der Photovoltaik-Solarstromkollektor (102) eine elektrisch isolierende Rückseitenfolie beinhaltet, die an einer Rückseite (111) gegenüber der aktiven Seite (103) angeordnet ist, wobei der Spalt (110) zwischen der Kühlplatte (106; 404; 504; 704) und der Rückseitenfolie ausgebildet ist.

9. Hybrid-Strom- und Wärmeerzeugungsvorrichtung nach einem der Ansprüche 5-8, wobei die Kühlplatte (404a, 404b) Überstände (406, 408) beinhaltet, welche den Spalt definieren, wobei die Kühlplatte an den Überständen mit dem Photovoltaik-Solarstromkollektor in Kontakt steht.

10. Hybrid-Strom- und Wärmeerzeugungsvorrichtung nach einem der Ansprüche 5-9, wobei die Kühlplatte (905) durch flexible Klebeverbindungen (904) am Photovoltaik-Solarstromkollektor angebracht ist, wobei der Luftspalt (110) durch die Höhe der flexiblen Klebeverbindungen (904) definiert ist.

11. Hybrid-Strom- und Wärmeerzeugungsvorrichtung nach einem der Ansprüche 5-10, wobei im normalen Betriebsmodus das Kondenswasser den Spalt (110) füllt.

12. Hybrid-Strom- und Wärmeerzeugungsvorrichtung nach einem der Ansprüche 5-11, wobei Öffnungen (113a-b) an den Kanten (115a-b) der Kühlplatte zwischen der Kühlplatte (106) und dem Photovoltaik-Solarstromkollektor gestatten, dass Umgebungsluft in den Spalt eintritt.

13. Hybrid-Strom- und Wärmeerzeugungssystem (800), welches Folgendes umfasst:
- eine Hybrid-Strom- und Wärmeerzeugungsvorrichtung (100) nach einem der Ansprüche 5-12;
- eine Wärmeerzeugungseinheit (802), die mit der Wärmetauscheinheit verbunden ist und zum Erzeugen von Wärme aus dem Kühlmedium (803) konfiguriert ist; und
- einen Stromverteilungsanschluss (804), der mit dem Photovoltaik-Solarstromkollektor verbunden ist und zum Empfangen von elektrischem Strom vom Photovoltaik-Solarstromkollektor konfiguriert ist.

## Revendications

1. Procédé de fonctionnement d'un dispositif hybride de génération d'énergie et de chaleur (100), lequel dispositif comprend :
- un collecteur d'énergie solaire photovoltaïque (102) configuré pour collecter l'énergie solaire à partir du rayonnement solaire reçu sur un côté actif (103) du collecteur d'énergie solaire photovoltaïque ; et
- une unité d'échange de chaleur (104) configurée pour refroidir le collecteur d'énergie solaire photovoltaïque, laquelle unité d'échange de chaleur comprend une plaque de refroidissement (106; 404; 504;704) agencée pour transférer la chaleur du collecteur d'énergie solaire photovoltaïque (102) vers un milieu de refroidissement,
dans lequel l'unité d'échange de chaleur (104) est adaptée pour transporter le milieu de refroidissement à l'écart de la plaque de refroidissement (106; 404; 504;704) en vue d'une extraction de chaleur du milieu de refroidissement,
dans lequel la plaque de refroidissement (106; 404; 504;704) est agencée avec un interstice (110) depuis un côté arrière (111) du collecteur d'énergie solaire photovoltaïque (102), **caractérisé en ce que** le milieu de refroidissement est agencé pour refroidir la plaque de refroidissement (106; 404; 504; 704) à une température qui permet à la vapeur d'eau de l'air ambiant dans l'interstice (110) de se condenser en eau sur la plaque de refroidissement (106 ;404 ;504 ;704) dans l'interstice (110),
lequel procédé comprend de :
- faire fonctionner le dispositif hybride de génération d'énergie et de chaleur (100) dans un mode de fonctionnement normal dans lequel l'interstice (110) est au moins partiellement rempli d'eau condensée, laquelle eau condensée transfère la chaleur du collecteur d'énergie solaire photovoltaïque (102) vers la plaque de refroidissement (106; 404; 504;704) ; et
- faire fonctionner le dispositif hybride de génération d'énergie et de chaleur (100) dans un mode de fonctionnement de sécurité dans lequel l'interstice (110) est rempli d'air pour réduire ainsi le transfert de chaleur du capteur solaire photovoltaïque (102) vers la plaque de refroidissement (106; 404; 504;704).

2. Procédé selon la revendication 1, dans lequel la température de la plaque de refroidissement (106; 404; 504;704) est maintenue en dessous du point de rosée de l'air ambiant dans le mode de fonctionnement normal.

3. Procédé selon la revendication 1 ou 2, dans lequel l'interstice (110) est maintenu rempli d'eau condensée en mode de fonctionnement normal.

4. Procédé selon une quelconque des revendications 1 à 3, dans lequel la température de la plaque de refroidissement (106; 404; 504;704) est maintenue au-dessus du point de rosée de l'air ambiant en mode de fonctionnement de sécurité.

5. Dispositif hybride de génération d'énergie et de chaleur (100), lequel dispositif comprenant :
- un collecteur d'énergie solaire photovoltaïque (102) configuré pour collecter l'énergie solaire provenant du rayonnement solaire reçue sur un côté actif (103) du collecteur d'énergie solaire photovoltaïque ; et
- une unité d'échange de chaleur (104) configurée pour refroidir le collecteur d'énergie solaire photovoltaïque, laquelle unité d'échange de chaleur comprend une plaque de refroidissement (106; 404; 504; 704) agencée pour transférer la chaleur du collecteur d'énergie solaire photovoltaïque (102) vers un milieu de refroidissement,
dans lequel l'unité d'échange de chaleur (104) est adaptée pour transporter le milieu de refroidissement à l'écart de la plaque de refroidissement (106; 404; 504;704) en vue d'une extraction de chaleur du milieu de refroidissement, dans lequel la plaque de refroidissement (106; 404; 504;704) est agencée avec un interstice (110) depuis un côté arrière (111) du collecteur d'énergie solaire photovoltaïque (102), **caractérisé en ce que**
le dispositif hybride de génération d'énergie et de chaleur (100) comprend en outre des moyens pour maintenir la température de la plaque de refroidissement (106; 404; 504;704) en dessous du point de rosée de l'air ambiant par le milieu de refroidissement pour permettre ainsi de faire fonctionner le dispositif hybride de génération d'énergie et de chaleur (100) dans un mode de fonctionnement normal dans lequel l'interstice (110) est au moins partiellement rempli d'eau condensée, laquelle eau condensée transfère la chaleur du collecteur d'énergie solaire photovoltaïque (102) à la plaque de refroidissement (106; 404; 504;704) et dans lequel le dispositif hybride de génération d'énergie et de chaleur (100) peut en outre fonctionner dans un mode de fonctionnement de sécurité dans lequel l'interstice (110) est rempli d'air pour ainsi réduire le transfert de chaleur du capteur solaire photovoltaïque (102) vers la plaque de refroidissement (106; 404; 504;704).

6. Dispositif hybride de génération d'énergie et de chaleur selon la revendication 5, dans lequel l'unité d'échange de chaleur (104) comprend une tuyauterie (108) disposée en contact thermique avec la plaque de refroidissement (106; 404; 504;704), dans lequel la tuyauterie (108) est configurée pour transporter le milieu de refroidissement jusqu'à la plaque de refroidissement (106 ;404 ;504 ;704) pour échanger de la chaleur avec la plaque de refroidissement.

7. Dispositif hybride de production d'énergie et de chaleur selon une quelconque des revendications 5 et 6, dans lequel la température de fonctionnement de la plaque de refroidissement (106; 404; 504;704), dans le mode de fonctionnement normal, est maintenue en dessous de la température ambiante.

8. Dispositif hybride de génération d'énergie et de chaleur selon une quelconque des revendications 5 à 7, dans lequel le collecteur d'énergie solaire photovoltaïque (102) comprend une feuille arrière électriquement isolante disposée sur une face arrière (111) opposée au côté actif (103), dans lequel l'interstice (110) est formé entre la plaque de refroidissement (106; 404; 504;704) et la feuille arrière.

9. Dispositif hybride de génération d'énergie et de chaleur selon une quelconque des revendications 5 à 8, dans lequel la plaque de refroidissement (404a, 404b) comprend des protubérances (406,408) qui définissent l'espace dans lequel la plaque de refroidissement est en contact avec le collecteur d'énergie solaire photovoltaïque au niveau des protubérances.

10. Dispositif hybride de génération d'énergie et de chaleur selon une quelconque des revendications 5-9, dans lequel la plaque de refroidissement (905) est fixée au collecteur d'énergie solaire photovoltaïque par des joints adhésifs flexibles (904), dans lequel l'interstice (110) est défini par la hauteur des joints adhésifs flexibles (904).

11. Dispositif hybride de génération d'énergie et de chaleur selon une quelconque des revendications 5 à 10, dans lequel l'eau de condensation remplit l'espace (110) en mode de fonctionnement normal.

12. Dispositif hybride de génération d'énergie et de chaleur selon une quelconque des revendications 5 à 11, dans lequel les ouvertures (113a-b) entre la plaque de refroidissement (106) et le collecteur d'énergie solaire photovoltaïque sur les bords (115a-b) de la plaque de refroidissement permettent à l'air ambiant de pénétrer dans l'interstice.

13. Système hybride de génération d'énergie et de chaleur (800) comprenant :
- un dispositif hybride de génération d'énergie et de chaleur (100) selon une quelconque des revendications 5-12 ;
- une unité de génération de chaleur (802) connectée à l'unité d'échange de chaleur et configurée pour générer de la chaleur à partir du milieu de refroidissement (803) ; et
- un terminal de distribution d'électricité (804) connecté au collecteur d'énergie solaire photovoltaïque et configuré pour recevoir de l'énergie électrique du capteur d'énergie solaire photovoltaïque.
